# EUROPEAN PATENT APPLICATION

(11) **EP 0 766 137 A1**
(43) Date of publication of application: **02.04.1997**
(21) Application number: 96202667.0
(22) Date of filing: 24.09.1996
(51) Int. Cl.: G03D 15/00, G03B 27/46

(54) **Index print with means for identifying a selected area of at least one single image**

(30) Priority: 29.09.1995 US 4542; 27.02.1996 US 607408
(71) Applicant: EASTMAN KODAK COMPANY, Rochester, New York 14650-2201 (US)
(72) Inventor: Murray, Thomas Joseph, Rochester, New York 14650-2201 (US); Hepworth, Gordon James, Rochester, New York 14650-2201 (US); Krahe, Michael David, Rochester, New York 14650-2201 (US)
(74) Representative: Haile, Helen Cynthia

(57) **Abstract**

An index print (10) includes a plurality of imagettes corresponding to respective images stored on an image recording medium such as photographic film, and means for identifying a selected area of at least one of the imagettes (3). The identifying means (20) has at least two portions which visibly contrast with each other to be readily visible regardless of the image content of the one imagette. The two portions of the identifying means (20) contrast because they have different colors and/or luminance levels. In one embodiment of the invention, the identifying means includes a first line adjacent the selected area of the one imagette and a second line adjacent the first line, the second line contrasting with the first line.

## Description

### FIELD OF THE INVENTION

The invention relates generally to the field of imaging, and in particular to index prints. More specifically, the invention relates to an index print with means for identifying a selected area of at least one imagette.

### BACKGROUND OF THE INVENTION

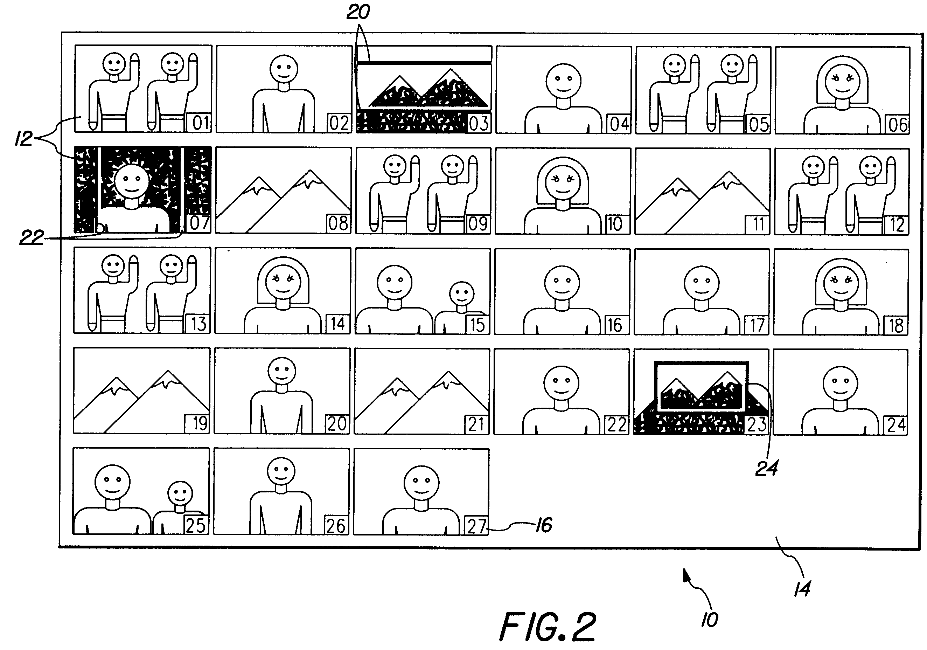

Japanese Kokai Patent Application No. HEI 5[1993]-27406 discloses an index print for presenting a plurality of positive images (imagettes) corresponding to images which are recorded on a photographic film. As shown in figure 2(A) of the 27406 Kokai, vertical and/or horizontal monochrome lines can be provided on a particular imagette to indicate, for example, that the corresponding image recorded on the film was designated to be printed as a pseudo panoramic, half-frame or telephoto image. Such a pseudo image is recorded on the film with a conventional aspect ratio. However, prior to picture taking, the camera operator made a selection on the camera that the image to be recorded should be printed as, for example, a panoramic image. This selection is recorded on the film and is used to inform a photofinisher that the particular image is to be printed in a panoramic format. Such printing is accomplished by masking the top and bottom portions of the film frame during printing.

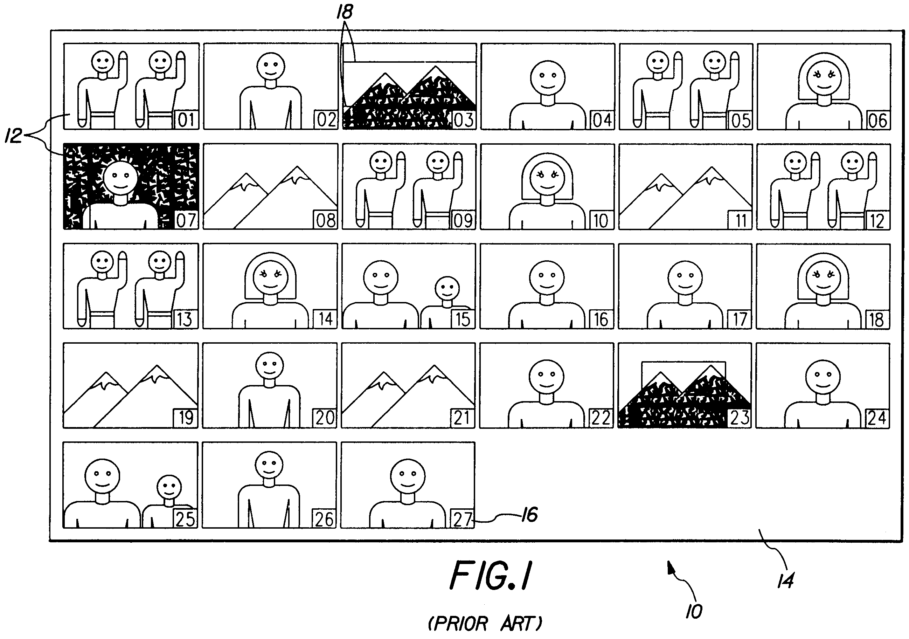

Figure 1 of the present application discloses an index print 10 according to the disclosure of the 27406 Kokai. A plurality of imagettes 12 are printed on a recording sheet 14. Each imagette includes a frame number 16 which corresponds to the frame on the photographic film containing the corresponding image. A problem with the index print disclosed in the 27406 Kokai is that the monochrome vertical and/or horizontal lines for designating a pseudo image may not be visible in portions of the imagette. For example, in frame number 3 imagette in Fig. 1, a pair of black horizontal lines 18 are used to indicate that the corresponding image on the film was designated as a panoramic image. A large portion of the lower black colored horizontal line is not visible because it is obscured by the dark base of the snow covered mountains in the imagette.

This problem is also evident in frame number 7 and 23 imagettes where vertical and/or horizontal black lines are provided to show, respectively, that the corresponding images on the filmstrip were designated, respectively, to be printed as a half-frame image and a telephoto image. Again, a large portion of the vertical and/or horizontal black lines are obscured by dark portions of the imagette. Such a situation is obviously problematic because an observer of the index print may have difficulty in discerning that a particular image was designated for panoramic, half-frame or telephoto printing.

### SUMMARY OF THE INVENTION

The present invention is directed to overcoming one or more of the problems set forth above. Briefly summarized, according to one aspect of the present invention, an index print includes a plurality of imagettes corresponding to respective images stored on an image recording medium, and means for identifying a selected area of at least one of the imagettes. The invention is characterized in that the identifying means has at least two portions which visibly contrast with each other to be readily visible regardless of the image content of the one imagette.

Accordingly, a viewer of the index print of the present invention will clearly be able to discern that a particular image, corresponding to an imagette on the index print, was designated for panoramic, half-frame, telephoto, HDTV, etc. printing.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 displays a prior art index print;
FIG. 2 discloses an index print according to a first embodiment of the present invention; and
FIG. 3 discloses an index print according to a second embodiment of the present invention.

### DETAILED DESCRIPTION OF THE INVENTION

Beginning with FIG. 2, an index print 10 according to the present invention includes a support sheet 14 on which are located a plurality of imagettes 12. The imagettes correspond to respective images which are stored on an image recording medium such as a photographic film, an optical disk or a video cassette tape. Frame number 3 imagette displays a pair of snow covered mountains and a pair of horizontal lines 20. Lines 20 identify that a middle section of the corresponding image has been selected to be printed in panoramic format. Each line 20 is actually a double line having a black line adjacent a white line. As such, the black portion of the upper line is visible against the light sky of the image while the white portion is not visible. With the lower line 20, the white portion of the line remains visible across the dark base of the mountains while the black portion is not visible. Accordingly, lines 20 will remain visible regardless of the image content of the imagette.

Frame number 7 imagette includes a pair of vertical double lines 22 for identifying that the middle section of the corresponding image is designated to be printed in a half-frame format. Notice that the white portions of double lines 22 remain visible in the dark background while the black portions of the double-line are not visible. Likewise, the black portion of double line 22 is visible in the light colored shirt that the person is wearing while the white portion of the double line is not visible. Again, a portion of the double-line will always be visible regardless of the image content of the imagette.

Frame number 23 imagette includes a double border 24 having a white border within a black border. The double border identifies that a central section of the corresponding image has been designated to be printed in a telephoto format. Notice that the white inner border remains visible in the dark base of the mountains while the black border is not visible. Likewise, the black border is visible in the light sky part of the imagette while the white border is not visible.

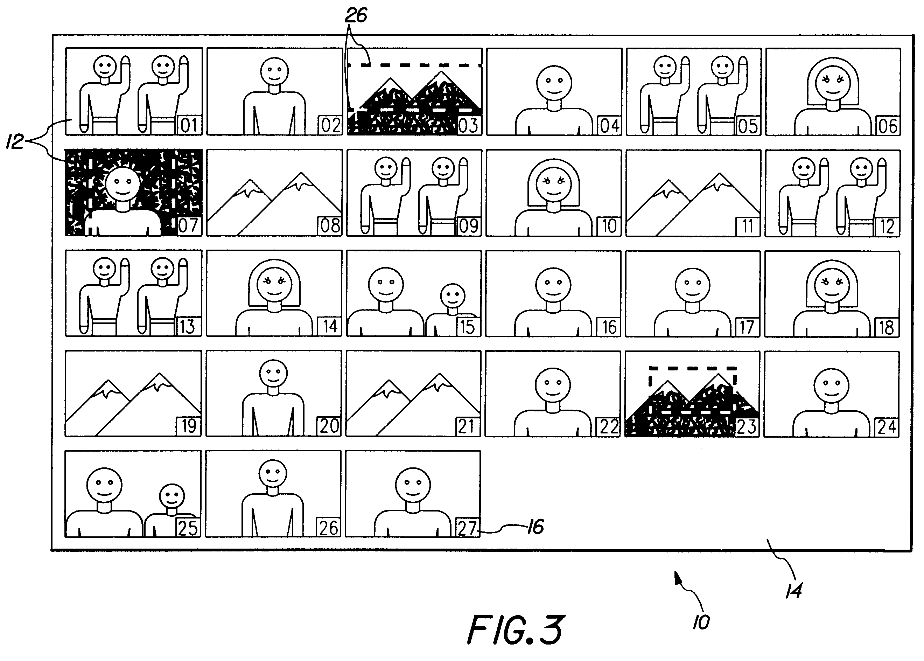

Turning to FIG. 3, a second embodiment of the invention will be described. In this embodiment, rather than using a double line, a single line is used which has a series of alternating black and white sections similar to a dotted line. Frame number 3 imagette includes a pair of single horizontal lines 26. Notice that the black sections of the upper line are visible against the light sky while the white sections are not visible. Similarly, the white sections of the lower single line are visible against the dark base of the mountains while the black sections are not visible. Frame number 7 and 23 imagettes also disclose how the single line of this embodiment remains visible regardless of the image content of the imagette.

The double line and single line described above each have portions which contrast with each other. The portions contrast because one portion is white and the other portion is black. The portions can be made to contrast with each other because they have different colors (e.g. yellow/green, red/blue). Alternatively, the portions of the line can be made to contrast with each other because they have different luminance (brightness) levels (e.g. light blue/dark blue).

The index print according to the present invention can be made by using the method and apparatus disclosed in the 27406 Kokai. To summarize briefly, after a photographic filmstrip has been developed to render the images recorded thereon visible, light is transmitted through each frame of the image and then is directed onto a CCD to electronically capture the image. A magnetic head reads a magnetic recording surface on the film to determine if the image was designated for panoramic, half-frame or telephoto printing (special aspect ratio printing). After all of the images on the film have been electronically captured, the electronic (digital) images, along with any special aspect ratio printing designations, are transmitted to an index printer. The index printer provides vertical and/or horizontal lines on those imagettes designated with special aspect ratios. These lines, as described above, have contrasting portions such that the lines will be visible regardless of the image content of an imagette. The index print of the present invention can also be made according to the disclosures of U.S. Patent Nos. 5,184,277; 4,903,068; or 4,933,773, all of which are incorporated herein by reference

The invention has been described with reference to a preferred embodiment. However, it will be appreciated that variations and modifications can be effected by a person of ordinary skill in the art without departing from the scope of the invention.

### PARTS LIST

- 10: index print
- 12: imagettes
- 14: support sheet
- 16: frame number
- 18: lines
- 20: double lines
- 22: double lines
- 24: double border
- 26: single lines

## Claims

1. An index print comprising a plurality of imagettes corresponding to respective images stored on an image recording medium, and means for identifying a selected area of at least one of the imagettes, is characterized in that:
the identifying means has at least two portions which visibly contrast with each other to be readily visible regardless of the image content of the one imagette.

2. The index print of claim 1, wherein the two portions of the identifying means include a first line adjacent the selected area of the one imagette and a second line adjacent the first line, the second line contrasting with the first line.

3. The index print of claim 1, wherein the two portions of the identifying means include a line adjacent the selected area of the one imagette, the line having a series of alternating sections which contrast with each other.

4. The index print of claim 1, wherein the two portions contrast with each other because the two portions have different colors.

5. The index print of claim 1, wherein the two portions contrast with each other because the two portions have different luminance levels.
